# FASCICULE DE BREVET EUROPEEN

(11) **EP 2 659 149 B1**
(45) Date de publication et mention de la délivrance du brevet: **14.01.2015**
(21) Numéro de dépôt: 11712954.4
(22) Date de dépôt: 02.03.2011
(51) Int. Cl.: F16B 2/18, F16B 7/14, B62K 19/36, B62J 1/08, F16B 2/04

(54) **DISPOSITIF DE BLOCAGE ENTRE DEUX TUBES MONTES A COULISSEMENT**
VORRICHTUNG ZUM GEGENSEITIGEN VERRIEGELN ZWEIER GLEITBARE MONTIERBARER ROHRE
DEVICE FOR MUTUALLY LOCKING TWO SLIDABLY MOUNTED TUBES

(30) Priorité: 31.12.2010 FR 1061401
(43) Date de publication de la demande: 06.11.2013
(73) Titulaire: Decathlon, 59650 Villeneuve D'ascq (FR)
(72) Inventeur: FROHLICHER, Fabien, 59120 Loos (FR); MARAIS, Tony, 59273 Fretin (FR); BASSETTI, Pierre, Louis, 59710 Merignies (FR)
(74) Mandataire: Balesta, Pierre
(86) Numéro de dépôt international: PCT/FR2011/050436
(87) Numéro de publication internationale: WO 2012/089941

(56) Documents cités:
- EP-A2- 0 849 148
- WO-A1-2009/027681
- DE-U1- 9 013 266
- US-A1- 2007 215 781

## Description

La présente invention concerne un dispositif de blocage entre un premier tube et un second tube configurés pour permettre le coulissement dudit premier tube dans ledit second tube. L'invention concerne également une bicyclette sur laquelle est agencé un dispositif de blocage objet de l'invention, entre la tige de selle et le tube de selle.

On connaît déjà des dispositifs de blocage entre un premier tube et un second tube, ledit premier tube étant configuré pour coulisser à l'intérieur dudit second tube lorsque le dispositif de blocage est désactivé. L'activation de ce dispositif de blocage permet au contraire de bloquer le coulissement du premier tube par rapport au second tube. De tels dispositifs de blocage sont notamment mis en oeuvre sur les bicyclettes entre la tige de selle, à l'extrémité supérieure de laquelle est agencée une selle et le tube de selle agencé sur le cadre de la bicyclette, en sorte de régler le positionnement en hauteur de la selle.

On connaît notamment la demande de brevet internationale publiée sous le numéro WO 2009/027681 A1 qui divulgue un dispositif de blocage comprenant une tringle agencée longitudinalement à l'intérieur d'un premier tube consistant en une tige de selle, monté coulissant à l'intérieur d'un second tube consistant en un tube de selle, et un système d'actionnement à came permettant de translater selon l'axe longitudinal dudit premier tube, ladite tringle. Le dispositif de blocage comprend un outre une première plaque agencée à l'extrémité inférieure du premier tube, une seconde plaque étant montée coulissante par rapport à la première plaque selon l'axe longitudinal du premier tube, cette seconde plaque étant assujettie à l'extrémité inférieure de la tringle. La première plaque et la seconde plaque sont disposées avec un écartement variable sous l'action de la tringle. A l'intérieur de cet écartement, c'est-à-dire entre la première et la seconde plaque, est agencé un anneau élastique déformable qui présente un diamètre externe, dans une position au repos, légèrement inférieure au diamètre interne du second tube en sorte de permettre le coulissement de cet anneau élastique et du premier tube à l'intérieur du second tube. Une action sur la tringle, par le biais du système d'actionnement permet de réduire l'écartement entre la première plaque et la seconde plaque, ce qui agit sur l'anneau élastique déformable et permet d'augmenter le diamètre externe dudit anneau élastique déformable en sorte de présenter un diamètre supérieur au diamètre interne du second tube. Cela permet de comprimer ledit anneau élastique déformable contre la face interne du second tube et ainsi, de bloquer la position entre le premier tube et le second tube.

US 2007/0215781 divulgue un dispositif de blocage selon le préambule de la revendication 1.

La présente invention consiste en une alternative de conception de dispositif de blocage entre un premier tube et un second tube qui a pour objet d'optimiser l'efficacité du blocage et ainsi, d'éviter tout glissement entre lesdits tubes lorsqu'un effort est exercé dans le sens de l'axe longitudinal entre lesdits tubes.

A cet effet, l'invention concerne un dispositif de blocage entre un premier tube et un second tube configurés pour permettre le coulissement dudit premier tube dans ledit second tube selon la revendication 1.

Selon la présente invention, on entend par « tringle » un élément reliant les cames à une pièce de manipulation, notamment une poignée d'actionnement, et permettant le déplacement desdites cames. Cet élément peut être une tige rigide, un câble, un ressort de raideur importante voire autre.

Selon un mode de conception de l'invention, le dispositif de blocage comprend au moins une tringle et quatre cames montées entre elles en croix, de manière symétrique et asymétrique par rapport à l'axe longitudinal du premier tube, lesdites cames étant en outre montées à pivotement selon l'axe de pivotement passant par l'axe longitudinal du premier tube, ledit axe de pivotement étant fixé audit premier tube.

Selon le dispositif de blocage objet de la présente invention, la tringle s'étend longitudinalement à l'intérieur du premier tube et débouche sur une extrémité distale dudit premier tube, disposée hors du second tube. Cela permet d'actionner le dispositif de blocage par une action sur la tringle exercée depuis l'extrémité distale du premier tube. Dans le cas d'une bicyclette, ledit premier tube étant constitué par une tige de selle, cela permet de pouvoir actionner la tringle depuis l'extrémité supérieure de la tige de selle, disposée en dessous de la selle.

Selon le mode de conception précité du dispositif de blocage objet de l'invention, un ressort de rappel est agencé entre les cames et l'axe de pivotement qui est solidaire du premier tube, le ressort de rappel étant configuré pour exercer un effort contre les cames en sorte de plaquer lesdites cames contre la face interne du second tube.

Selon une variante de conception du dispositif de blocage objet de l'invention, le système de cames comprend deux premières cames montées entre elles à pivotement selon un premier axe de pivotement perpendiculaire à l'axe longitudinal du premier tube et assujetties à la tringle. En outre, ces deux premières cames sont respectivement montées à pivotement selon un second et un troisième axes de pivotement perpendiculaires à l'axe longitudinal du premier tube et disposés entre eux symétriquement par rapport audit axe longitudinal du premier tube.

Selon cette variante de conception du dispositif de blocage objet de l'invention, le système de cames comprend deux secondes cames montées entre elles à pivotement selon un quatrième axe de pivotement perpendiculaire à l'axe longitudinal du premier tube. Ces deux secondes cames sont respectivement montées à pivotement selon les second et troisième axes de pivotement, lesdites deux secondes cames étant disposées symétriquement aux deux premières cames par rapport à un axe de symétrie passant par le second et le troisième axe de pivotement. Par ailleurs, un ressort de rappel est agencé entre le premier axe de pivotement et le quatrième axe de pivotement. Cette conception permet de bloquer le premier tube par rapport au second tube lorsqu'un effort est exercé dans l'un ou l'autre sens longitudinal sur le premier tube par rapport au second tube.

Selon cette variante de conception du dispositif de blocage objet de l'invention, les deux premières cames comprennent chacune un trou oblong configuré pour recevoir à coulissement le premier axe de pivotement. De même, les deux secondes cames comprennent chacune un trou oblong configuré pour recevoir à coulissement le quatrième axe de pivotement. Cette conception permet d'accentuer l'effort de contact des cames sur la face interne du second tube lorsque l'on tend à déplacer le premier tube vis-à-vis du second tube, dans un sens ou dans l'autre selon l'axe longitudinal desdits tubes.

Selon le dispositif de blocage objet de l'invention, celui-ci comprend une poignée de manipulation assujettie à la au moins une tringle, cette poignée de manipulation étant configurée pour au moins déplacer la tringle dans sa position de déblocage permettant un déplacement des cames dans leur première position.

Selon un mode de réalisation, un ressort de rappel est agencé entre le premier tube et la poignée de manipulation, ledit ressort de rappel étant configuré pour exercer une poussée sur la tringle et ramener les cames dans leur seconde position.

Bien entendu, on peut envisager que le repositionnement des cames soit réalisé manuellement au moyen de la poignée de manipulation, configurée dans ce cas pour ramener la ou les tringles dans une position de blocage selon laquelle les cames se plaquent contre la face interne du second tube.

Selon le dispositif de blocage objet de l'invention, les au moins deux cames sont disposées à l'intérieur du premier tube. En outre, ce premier tube comprend au moins deux lumières configurées pour permettre le passage des cames en sorte de les disposer dans leur seconde position, en contact contre la face interne du second tube.

Selon le dispositif de blocage objet de l'invention, les cames comprennent chacune au moins une surface de contact contre la face interne du second tube, ladite surface de contact comprenant des crans configurés pour agripper la face interne du second tube. Cela permet de renforcer le blocage du premier tube par rapport au second tube.

L'invention concerne également une bicyclette qui comprend notamment un cadre comportant un tube de selle, une tige de selle assemblée à son extrémité supérieure avec une selle, ladite tige de selle étant montée coulissante dans le tube de selle. Dans ce cas, la tige de selle constitue le premier tube et le tube de selle constitue le second tube. En outre la bicyclette comprend un dispositif de blocage objet de l'invention, agencé entre la tige de selle et le tube de selle.

Selon la bicyclette objet de l'invention, une poignée de manipulation de la tringle est disposée sous la selle.

Selon la bicyclette objet de l'invention, la tige de selle et le tube de selle ont chacun une section en coupe transversale qui comporte deux méplats opposés l'un par rapport à l'autre. En outre, les cames du dispositif de blocage sont configurées pour prendre appui contre les deux méplats du tube de selle. Cela présente pour avantage, de par la présence des méplats, de bloquer la rotation entre la tige de selle et le tube de selle selon l'axe longitudinal de ladite tige et dudit tube de selle. En outre, ces méplats permettent d'augmenter la surface de contact entre les cames et la face interne du tube de selle, ce qui permet d'augmenter le frottement desdites cames sur la face interne du tube de selle et ainsi de renforcer le blocage entre la tige de selle et le tube de selle.

D'autres caractéristiques et avantages de la présente invention apparaîtront à la lecture de la description suivante de deux modes de conception du dispositif de blocage mis en oeuvre notamment sur une bicyclette, lesquels s'appuient sur des figures parmi lesquelles :
- la figure 1 illustre un mode préférentiel de conception du dispositif de blocage agencé sur un cadre de bicyclette entre la tige de selle et le tube de selle ;
- la figure 2 illustre le dispositif de blocage selon la figure 1 ;
- la figure 3 illustre un schéma cinématique du dispositif de blocage illustré en figure 2 ;
- la figure 4 illustre une variante de conception du dispositif de blocage agencé à l'intérieur de la tige de selle ;
- la figure 5 illustre un mode de conception préférentiel du tube de selle et de la tige de selle de la bicyclette objet de l'invention, sur laquelle est agencé un dispositif de blocage objet de l'invention.

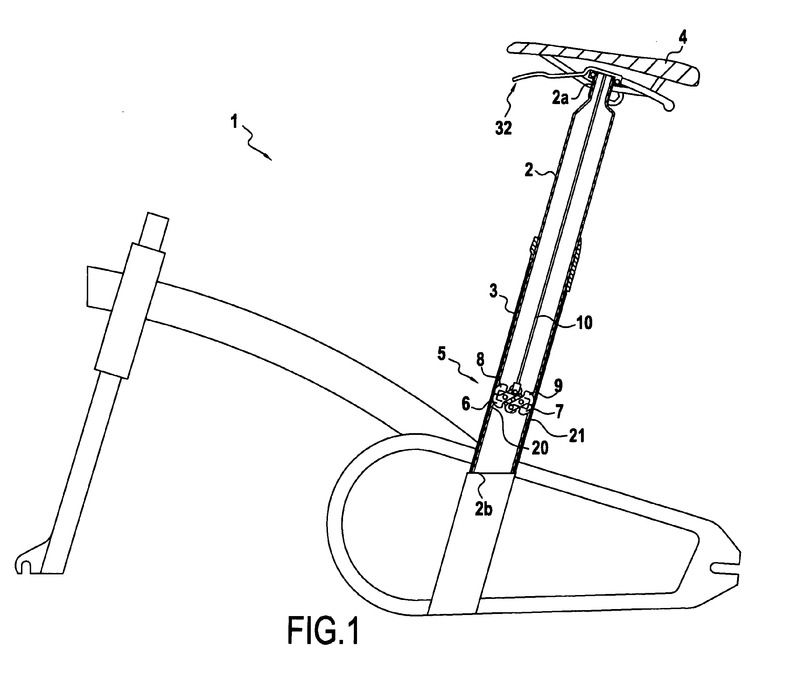

Sur la figure 1 est illustré un cadre de bicyclette 1 sur lequel est agencée, de manière traditionnelle, une tige de selle 2 montée coulissant à l'intérieur d'un tube de selle 3. Cette tige de selle 2 reçoit à son extrémité supérieure 2a une selle 4. On distingue sur cette figure 1 la mise en oeuvre d'un dispositif de blocage 5 agencé entre la tige de selle 2 et le tube de selle 3, lequel a pour fonction de bloquer le coulissement de la tige de selle 2 vis-à-vis du tube de selle 3.

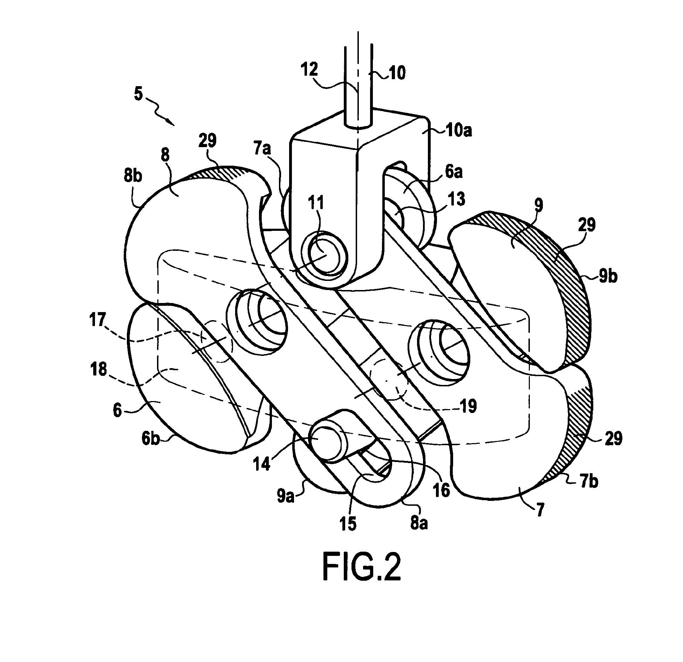

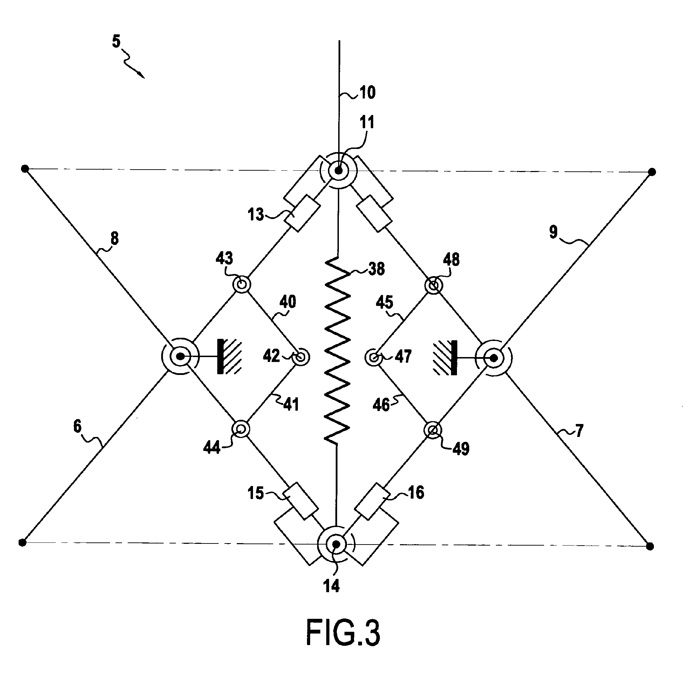

Le dispositif de blocage 5 illustré sur la figure 1 apparaît plus en détail au regard des figures 2 et 3. On constate que ce dispositif de blocage 5 comporte un premier jeu de deux cames 6, 7 et un second jeu de deux cames 8, 9. Les cames 6, 7 sont disposées symétriquement par rapport à l'axe longitudinal de la tige de selle 2, il en est de même pour les cames 8, 9. On constate en outre que ce dispositif de blocage 5 comprend une tringle 10 permettant d'actionner le système de cames constitué desdites cames 6, 7, 8, 9.

On constate sur la figure 2 que l'extrémité inférieure 10a de la tringle est configurée pour recevoir au moins à pivotement les extrémités proximales 6a, 7a des deux premières cames 6, 7. Pour cela, un axe de pivotement 11 est disposé perpendiculairement à l'axe longitudinal 12 de la tringle qui s'étend longitudinalement dans la tige de selle, selon l'axe longitudinal de ladite tige de selle, cet axe de pivotement 11 reçoit à pivotement lesdites extrémités proximales 6a, 7a desdites cames 6, 7.

On constate en outre sur la figure 2 qu'un premier trou oblong 13 est agencé au niveau de l'extrémité proximale 6a de la première came 6, ce trou oblong recevant à coulissement l'axe de pivotement 11, ce qui permet de faire coulisser ladite première extrémité proximale 6a le long du trou oblong 13 en permettant concomitamment le pivotement de la came 6 par rapport à la tringle 10.

Un tel trou oblong est également agencé au niveau de l'extrémité proximale 7a de la seconde came 7. Ainsi les deux extrémités proximales 6a, 7a des cames 6, 7 sont capables de coulisser par rapport à l'axe de pivotement 11 et concomitamment de pivoter selon cet axe de pivotement 11. Cette conception a pour objet de permettre d'intensifier la pression exercée par les cames 6, 7 sur la face interne du tube de selle 3 lorsque la tige de selle 2 exerce un effort vers le bas par rapport au tube de selle 3, notamment lorsque le cycliste est assis sur la selle.

On constate de même que les secondes cames 8, 9 sont assemblées entre elles au moyen d'un axe de pivotement 14 disposé parallèlement par rapport au premier axe de pivotement 11, c'est-à-dire perpendiculairement à l'axe longitudinal 12 de la tringle 10 et à l'axe longitudinal de la tige de selle.

On constate que l'axe de pivotement 14 est également monté à coulissement dans deux trous oblongs 15, 16 agencés au niveau des extrémités proximales 8a, 9a des deux cames 8,9. Ainsi, les deux cames 8, 9 pivotent entre elles selon un axe de pivotement 14 et coulissent entre elles le long des trous oblongs 15, 16.

Cette conception a pour fonction de permettre aux cames 8, 9 d'intensifier la pression de contact sur la face interne du tube de selle 3 lorsque la tige de selle 2 tend à être déplacée vers l'extérieur par rapport au tube de selle 3, notamment lorsque l'utilisateur soulève la bicyclette en la maintenant par la selle 4 et, de relâcher les cames 6, 7 opposées.

On constate en outre sur les figures 2 et 3 que la came 6 et la came 8 sont montées chacune et entre elles à pivotement selon un axe de pivotement 17 par rapport à une pièce 18 fixe à l'intérieur de la tige de selle 2. De même, la came 7 et la came 9 sont montées chacune et entre elles à pivotement selon un axe de pivotement 19 qui est solidaire de la pièce 18 fixe à l'intérieur de la tige de selle 2. Ces deux axes de pivotement 17 et 19 sont parallèles aux axes de pivotement 11, 14 et disposés de manière symétrique par rapport à l'axe longitudinal de la tige de selle 2 selon lequel passent les deux axes de pivotement 11 et 14. On constate que la came 6 et la came 8 sont disposées symétriquement par rapport à un axe transversal passant par les axes de pivotement 17, 19. Il en est de même pour les cames 7 et 9.

On constate en regard de la figure 3 que des pièces 40, 41, de préférence sous la forme de lames, sont montées entre elles en liaison pivot 42. De même la première pièce 40 est montée en liaison pivot 43 sur la came 6 et la seconde pièce est montée en liaison pivot 44 sur la came 8. Cela permet d'actionner simultanément la came 6 et la came 8. Une conception similaire est mise en oeuvre entre les deux autres cames 7 et 9, tel que schématisé en figure 3. Ainsi deux pièces 45, 46 sont montées en liaison pivot 47 entre elles, la première pièce 45 étant montée en liaison pivot 48 sur la came 7 et la seconde pièce 46 étant montée en liaison pivot 49 sur la came 9. Cela permet d'actionner simultanément les cames 7 et 9.

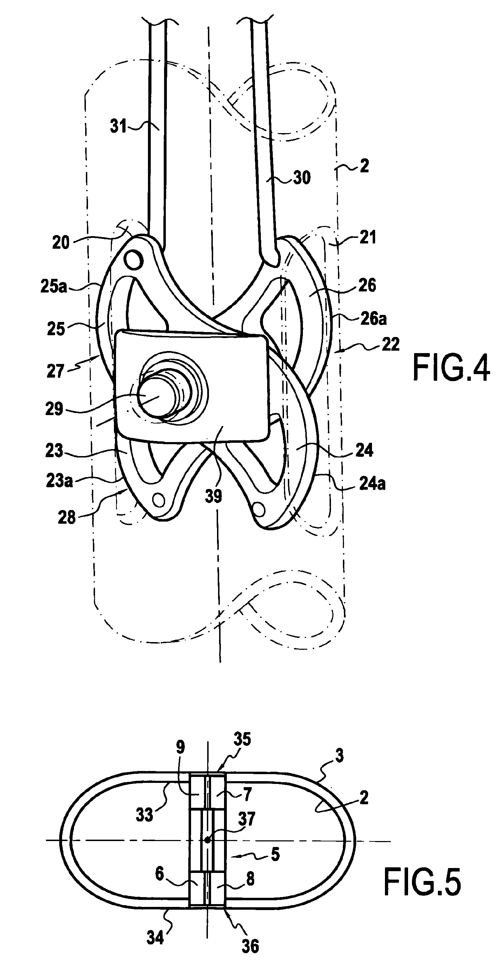

On constate au regard des figures 1 et 2 que les extrémités distales 6b, 7b, 8b, 9b des quatre cames 6, 7, 8, 9 sont configurées pour venir en contact sur la face interne du tube de selle 3. On constate sur la figure 1 que le dispositif de blocage est de préférence agencé à l'intérieur de la tige de selle 2. Pour cela, la tige de selle comprend des lumières 20, 21, qui apparaissent plus en détail sur la figure 4 illustrant une variante de conception du dispositif de blocage 22, ces lumières permettant le passage des extrémités distales 6b, 7b, 8b, 9b des quatre cames 6, 7, 8, 9, en sorte de permettre à celles-ci de venir en contact sur la face interne du tube de selle 3. On constate que ces extrémités distales 6b, 7b, 8b, 9b des quatre cames ont une forme plus ou moins arrondie.

On constate au travers de la figure 3 qu'un ressort 38 est agencé entre l'axe de pivotement 11 et l'axe de pivotement 14, ce ressort 38 s'étendant selon l'axe longitudinal de la tringle 10 et de la tige de selle 2. Ce ressort 38 est monté en extension. Ce ressort 38 a pour fonction de plaquer les cames 6, 7, 8, 9 contre le tube 3 après relâchement de la tringle 10.

La figure 4 illustre une variante de conception du dispositif de blocage. Selon cette figure 4, le dispositif de blocage 22 comprend quatre cames 23, 24, 25, 26 qui sont montées en croix. Les deux cames 23, 26 sont mises en oeuvre au moyen d'une seule et même pièce 27 présentant une forme d'hystérésis ; de même, les deux cames 24, 25 sont mises en oeuvre au moyen d'une seule et même pièce 28 présentant une forme d'hystérésis qui présente une symétrie par rapport à la première pièce 27 selon l'axe longitudinal de la tige de selle. Cette première pièce 27 et cette seconde pièce 28 sont montées à pivotement selon un axe de pivotement 29 disposé perpendiculairement à l'axe longitudinal de la tige de selle 2 et passant par cet axe longitudinal, ledit axe de pivotement étant fixe par rapport à la tige de selle 2. On remarque en outre que la came 28 et la came 26 sont disposées symétriquement par rapport à l'axe de pivotement 29 ou asymétriquement par rapport à l'axe longitudinal de la tige de selle 2. De même, la came 25 et la came 24 sont disposées symétriquement par rapport à cet axe de pivotement 29 ou asymétriquement par rapport à l'axe longitudinal de la tige de selle 2.

On constate sur la figure 4 que les extrémités distales 23a, 24a, 25a, 26a présentent une forme en goutte d'eau qui est configurée pour accentuer la pression exercée contre la face interne du tube de selle 3 lorsque l'on tente à déplacer la tige de selle 2 par rapport au tube de selle 3 dans un sens ou dans l'autre selon l'axe longitudinal de la tige de selle 2. Ainsi, les extrémités distales 23a, 24a des deux cames 23, 24, de par leur forme en goutte d'eau, accentuent la pression sur la face interne du tube de selle 3 lorsque l'on tend à déplacer la tige de selle 2 à l'intérieur du tube de selle 3. Inversement, les extrémités distales 25a, 26a des deux cames 25, 26, de par leur forme en goutte d'eau, permettent d'accentuer la pression exercée sur la face interne du tube de selle 3 lorsque l'on tend à déplacer la tige de selle 2 vers l'extérieur du tube de selle 3.

On constate sur la figure 4 que la première pièce 28 constituant les deux cames 23, 26 est actionnée au moyen d'une première tringle 30, tandis que la seconde pièce 27 constituant les deux cames 25, 24 est actionnée au moyen d'une seconde tringle 31 qui s'étend longitudinalement à l'intérieur de la tige de selle 2.

On constate sur la figure 2 que la surface de contact des cames 6, 7, 8, 9 présentent des crans 50 par exemple mis en oeuvre au moyen d'un moletage, ces crans 50 permettant d'augmenter l'adhérence des extrémités distales 6b, 7b, 8b, 9b des cames 6, 7, 8, 9 en contact sur la face interne du tube de selle 3. De tels crans 50 peuvent être également envisagés sur les cames 23, 24, 25, 26 selon le second mode de conception du dispositif de blocage 22 illustré en figure 4.

Tel qu'illustré sur la figure 1, la tringle 10 s'étend longitudinalement à l'intérieur de la tige de selle 2 jusqu'au niveau de son extrémité supérieure 2a au niveau de laquelle ladite tringle 10 débouche. Cette tringle est configurée pour être actionnée au moyen d'une poignée de manipulation 32, illustrée en figure 1. Une conception similaire peut être envisagée avec les deux tringles 30, 31 illustrées sur la figure 4.

Cette poignée de manipulation 32 permet au moins de déplacer la tringle 10 dans une position selon laquelle celle-ci actionne les deux cames 6, 7 et, par le biais du ressort 38, les deux cames 8, 9, en sorte de dégager ces quatre cames 6, 7, 8, 9 de la face interne du tube de selle 3 et ainsi permettre le coulissement de la tige de selle 2 par rapport au tube de selle 3.

Le dispositif de blocage comprend en outre un système de repositionnement des cames en appui contre la face interne du tube de selle 3 en sorte d'assurer le blocage de la tige de selle 2 par rapport au tube de selle 3. Ce système de repositionnement peut être mis en oeuvre selon diverses variantes de conception, en fonction dudit dispositif de blocage. Ainsi, sur le dispositif de blocage 5 illustré aux figures 1 à 3, on prévoit de préférence un ressort de rappel (non illustré sur les figures) agencé entre la tige de selle 2 et la poignée de manipulation 32, ce ressort de rappel permettant d'actionner ladite poignée de manipulation 32 qui agit sur la tringle 10 et permet de repositionner les cames 6, 7, 8, 9 en appui contre la face interne du tube de selle 3. Un tel ressort de rappel peut également être mis en oeuvre entre la poignée de manipulation et l'extrémité supérieure 2a de la tige de selle 2, avec le dispositif de blocage 22 illustré en figure 4.

Sur le mode de conception du dispositif de blocage 22, illustré en figure 4, un ressort de rappel (non illustré sur les figures) est agencé entre les cames 23, 24, 25, 26 et l'axe de pivotement 29 qui est solidaire de la tige de selle 2. Ce ressort de rappel est notamment du type ressort à spirales et permet d'exercer un effort sur les cames en sorte de les plaquer contre la face interne du tube de selle 3 du cadre de bicyclette.

De manière préférentielle, tel qu'illustré en figure 5, la tige de selle et le tube de selle comprennent une section transversale qui présente deux méplats disposés en vis-à-vis. Ainsi, la tige de selle 2 comprend deux méplats 33, 34 et le tube de selle 3 comprend deux méplats 35, 36. Cela permet, lorsque la tige de selle 2 est emboitée dans le tube de selle 3, de bloquer la rotation de la tige de selle 2 par rapport au tube de selle 3, selon l'axe longitudinal 37 de la tige de selle 2 et du tube de selle 3. En outre, les cames, par exemple celles 6, 7, 8, 9 du dispositif de blocage 5 illustré en figure 2, sont configurées pour entrer au contact dans lesdites zones de méplats 35, 36 du tube de selle 3, tel que schématisé sur la figure 5. Cela permet d'augmenter la surface de contact entre les cames et les méplats 35, 36.

D'autres variantes de conception peuvent être envisagées sans sortir du cadre de la présente invention. Par exemple, selon les modes de conception illustrés en figures 1 à 4, le dispositif de blocage 5, 22 est intégré à l'intérieur de la tige de selle 2. On pourrait toutefois envisager l'agencement d'un tel dispositif de blocage au niveau de l'extrémité inférieure de la tige de selle 2, en dehors de ladite tige de selle. Pour cela, il conviendrait par exemple de modifier la forme des pièces 18, 39 permettant le support des axes de pivotement 17, 19, 29, en sorte de fixer lesdites pièces 18, 39 au niveau de ladite extrémité inférieure 2b de la tige de selle 2.

Bien entendu, on peut envisager l'agencement d'un tel dispositif de blocage 5, 22 sur d'autres produits sur lesquels sont montés à coulissement un premier tube à l'intérieur d'un second tube et nécessitant d'effectuer un blocage dudit premier tube par rapport audit second tube.

## Revendications

1. Dispositif de blocage (5, 22) entre un premier tube (2) et un second tube (3) configurés pour permettre le coulissement dudit premier tube (2) dans ledit second tube (3), le dispositif de blocage comprenant au moins une tringle (10, 30, 31) configurée pour se déplacer à l'intérieur du premier tube (2) et être manipulée selon deux positions, depuis l'extérieur dudit premier tube, le dispositif de blocage (5, 22) comprenant un système de cames comportant au moins deux cames (6, 7, 8, 9, 23, 24, 25, 26) montées en liaison pivot sur le premier tube selon au moins un axe de pivotement (17, 19, 29) perpendiculaire à un axe longitudinal (12, 37) dudit premier tube (2) et configurées pour pivoter soit dans une première position selon laquelle les cames sont hors de contact du second tube et autorisent le coulissement du premier tube à l'intérieur du second tube, soit dans une seconde position selon laquelle chacune des cames exerce une pression contre la face interne du second tube et bloque le coulissement du premier tube à l'intérieur du second tube, la tringle étant assemblée avec le système de cames et configurée pour au moins déplacer les cames dans leur première position lorsque ladite tringle est dans une position de déblocage, un système de repositionnement étant configuré pour ramener lesdites cames dans leur seconde position, ledit dispositif de blocage (5, 22) étant **caractérisé en ce que** ledit système de cames est configuré pour accentuer la pression de contact des cames (6, 7, 8, 9, 23, 24, 25, 26) sur la face interne du second tube lors d'une augmentation d'un effort exercé sur le premier tube visant à déplacer ledit premier tube tant vers l'intérieur du second tube que vers l'extérieur du second tube.

2. Dispositif de blocage (22) entre un premier tube (2) et un second tube (3) selon la revendication **1,** lequel comprend au moins une tringle (30, 31) et quatre cames (23, 24, 25, 26) montées entre elles en croix, de manière symétrique et asymétrique par rapport à l'axe longitudinal (12) du premier tube, lesdites cames étant en outre montées à pivotement selon l'axe de pivotement (29) passant par l'axe longitudinal du premier tube et fixé audit premier tube.

3. Dispositif de blocage (5, 22) entre un premier tube (2) et un second tube (3) selon la revendication **1** ou **2,** la tringle (10, 30, 31) se déplaçant longitudinalement à l'intérieur du premier tube (2) et débouchant sur une extrémité distale (2a) dudit premier tube, disposée hors du second tube.

4. Dispositif de blocage (22) entre un premier tube (2) et un second tube (3) selon la revendication **2,** un ressort de rappel étant agencé entre les cames (23, 24, 25, 26) et l'axe de pivotement (29) qui est solidaire du premier tube, ledit ressort de rappel étant configuré pour exercer un effort contre les cames en sorte de plaquer lesdites cames contre la face interne du second tube.

5. Dispositif de blocage (5) entre un premier tube (2) et un second tube (3) selon la revendication **1,** le système de cames comprenant deux premières cames (6, 7) montées entre elles à pivotement selon un premier axe de pivotement (11) perpendiculaire à l'axe longitudinal (12) du premier tube et assujetti à la tringle (10), lesdites deux premières cames étant respectivement montées à pivotement selon un second (17) et un troisième (19) axes de pivotement perpendiculaires à l'axe longitudinal du premier tube et disposés entre eux symétriquement par rapport audit axe longitudinal.

6. Dispositif de blocage (5) entre un premier tube (2) et un second tube (3) selon la revendication **5,** le système de cames comprenant deux secondes cames (8, 9) montées entre elles à pivotement selon un quatrième axe de pivotement (14) perpendiculaire à l'axe longitudinal (12) du première tube, lesdites deux secondes cames étant respectivement montées à pivotement selon les second (17) et troisième (19) axes de pivotement, lesdites deux secondes cames étant disposées symétriquement aux deux premières cames (6, 7) par rapport à un axe de symétrie passant par le second et le troisième axe de pivotement, un ressort de rappel (38) étant agencé entre le premier axe de pivotement (11) et le quatrième axe de pivotement.

7. Dispositif de blocage (5) entre un premier tube (2) et un second tube (3) selon la revendication **5** ou **6,** les deux premières cames (6, 7) comprenant chacune un trou oblong (13) configuré pour recevoir à coulissement le premier axe de pivotement (11).

8. Dispositif de blocage (5) entre un premier tube (2) et un second tube (3) selon la revendication **6,** les deux secondes cames (8, 9) comprenant chacune un trou oblong (15, 16) configuré pour recevoir à coulissement le quatrième axe de pivotement (14).

9. Dispositif de blocage (5, 22) entre un premier tube (2) et un second tube (3) selon l'une quelconque des revendications **1 à 8,** lequel comprend une poignée de manipulation (32) assujettie à la tringle (10, 30, 31), ladite poignée de manipulation étant configurée pour au moins déplacer la tringle dans sa position de déblocage.

10. Dispositif de blocage (5, 22) entre un premier tube (2) et un second tube (3) selon la revendication **9,** un ressort de rappel étant agencé entre le premier tube et la poignée de manipulation (32), ledit ressort de rappel étant configuré pour exercer une poussée sur la tringle (10, 30, 31) et ramener les cames (6, 7, 8, 9, 23, 24, 25, 26) dans leur seconde position.

11. Dispositif de blocage (5, 22) entre un premier tube (2) et un second tube (3) selon l'une quelconque des revendications **1 à 10,** les au moins deux cames (6, 7, 8, 9, 23, 24, 25, 26) étant disposées à l'intérieur du premier tube, ledit premier tube comprenant au moins deux lumières (20, 21) configurées pour permettre le passage des cames en sorte de les disposer dans leur seconde position, en contact contre la face interne du second tube.

12. Dispositif de blocage (5, 22) entre un premier tube (2) et un second tube (3) selon l'une quelconque des revendications **1 à 11,** les cames (6, 7, 8, 9, 23, 24, 25, 26) comprenant chacune au moins une surface de contact contre la face interne du second tube, ladite surface de contact comprenant des crans (50) configurés pour agripper la face interne du second tube.

13. Bicyclette (1) comprenant notamment un cadre comportant un tube de selle (3), une selle (4) et une tige de selle (2) prolongeant vers le bas ladite selle, la tige de selle étant montée coulissante dans le tube de selle, ladite bicyclette comprenant en outre un dispositif de blocage (5, 22) objet de l'une des revendications **1 à 12,** ladite tige de selle constituant le premier tube et ledit tube de selle constituant le second tube.

14. Bicyclette (1) selon la revendication **13,** une poignée de manipulation (32) de la tringle étant disposée sous la selle (4).

15. Bicyclette (1) selon la revendication **14,** la tige de selle (2) et le tube de selle (3) ayant chacun une section transversale comportant deux méplats (33, 34, 35, 36) opposés l'un par rapport à l'autre, les cames (6, 7, 8, 9, 23, 24, 25, 26) prenant appui sur les méplats (35, 36) du tube de selle.

## Patentansprüche

1. Blockiervorrichtung (5, 22) zwischen einem ersten Rohr (2) und einem zweiten Rohr (3), die dazu ausgelegt sind, das Verschieben des ersten Rohrs (2) in dem zweiten Rohr (3) zu ermöglichen, wobei die Blockiervorrichtung wenigstens eine Stange (10, 30, 31) umfasst, die dazu ausgelegt ist, sich innerhalb des ersten Rohrs (2) zu bewegen und von außerhalb des ersten Rohrs in zwei Positionen gestellt zu werden, wobei die Blockiervorrichtung (5, 22) ein Nockensystem umfasst, das wenigstens zwei Nocken (6, 7, 8, 9, 23, 24, 25, 26) enthält, die an dem ersten Rohr um wenigstens eine Schwenkachse (17, 19, 29), welche zu einer Längsachse (12, 37) des ersten Rohrs (2) senkrecht verläuft, drehgelenkig angebracht sind und dazu ausgelegt sind, entweder in eine erste Position, in der die Nocken außer Kontakt mit dem zweiten Rohr sind und das Verschieben des ersten Rohrs innerhalb des zweiten Rohrs zulassen, oder in eine zweite Position zu schwenken, in der ein jeder der Nocken einen Druck auf die Innenseite des zweiten Rohrs ausübt und das Verschieben des ersten Rohrs innerhalb des zweiten Rohrs blockiert, wobei die Stange mit dem Nockensystem verbunden und dazu ausgelegt ist, wenigstens die Nocken in ihre erste Position zu bewegen, wenn sich die Stange in einer Entriegelungsposition befindet, wobei ein System zum erneuten Positionieren dazu ausgelegt ist, die Nocken in ihre zweite Position zurückzubringen, wobei die Blockiervorrichtung (5, 22) **dadurch gekennzeichnet ist, dass** das Nockensystem dazu ausgelegt ist, den Kontaktdruck der Nocken (6, 7, 8, 9, 23, 24, 25, 26) auf die Innenseite des zweiten Rohrs bei einer Erhöhung einer auf das erste Rohr ausgeübten Kraft zur Bewegung des ersten Rohrs sowohl zum Inneren des zweiten Rohrs als auch zur Außenseite des zweiten Rohrs zu verstärken.

2. Blockiervorrichtung (22) zwischen einem ersten Rohr (2) und einem zweiten Rohr (3) nach Anspruch 1, die wenigstens eine Stange (30, 31) und vier Nocken (23, 24, 25, 26), welche symmetrisch und asymmetrisch in Bezug auf die Längsachse (12) des ersten Rohrs untereinander kreuzweise angebracht sind, umfasst, wobei die Nocken ferner um die Schwenkachse (29), die durch die Längsachse des ersten Rohrs verläuft und an dem ersten Rohr befestigt ist, schwenkbar angebracht sind.

3. Blockiervorrichtung (5, 22) zwischen einem ersten Rohr (2) und einem zweiten Rohr (3) nach Anspruch 1 oder 2, wobei die Stange (10, 30, 31) sich innerhalb des ersten Rohrs (2) in Längsrichtung bewegt und an einem außerhalb des zweiten Rohrs angeordneten distalen Ende (2a) des ersten Rohrs ausmündet.

4. Blockiervorrichtung (22) zwischen einem ersten Rohr (2) und einem zweiten Rohr (3) nach Anspruch 2, wobei eine Rückstellfeder zwischen den Nocken (23, 24, 25, 26) und der Schwenkachse (29), die mit dem ersten Rohr fest verbunden ist, angeordnet ist, wobei die Rückstellfeder dazu ausgelegt ist, eine Kraft auf die Nocken auszuüben, um die Nocken gegen die Innenseite des zweiten Rohrs zu drücken.

5. Blockiervorrichtung (5) zwischen einem ersten Rohr (2) und einem zweiten Rohr (3) nach Anspruch 1, wobei das Nockensystem zwei erste Nocken (6, 7) umfasst, die um eine erste Schwenkachse (11), welche zu der Längsachse (12) des ersten Rohrs senkrecht verläuft und an der Stange (10) befestigt ist, schwenkbar untereinander angebracht sind, wobei die beiden ersten Nocken um eine zweite (17) bzw. eine dritte (19) Schwenkachse, die zu der Längsachse des ersten Rohrs senkrecht verlaufen und in Bezug auf die Längsachse symmetrisch untereinander angeordnet sind, schwenkbar angebracht sind.

6. Blockiervorrichtung (5) zwischen einem ersten Rohr (2) und einem zweiten Rohr (3) nach Anspruch 5, wobei das Nockensystem zwei zweite Nocken (8, 9) umfasst, die um eine vierte Schwenkachse (14), welche zu der Längsachse (12) des ersten Rohrs senkrecht verläuft, schwenkbar untereinander angebracht sind, wobei die beiden zweiten Nocken um die zweite (17) bzw. die dritte (19) Schwenkachse schwenkbar angebracht sind, wobei die beiden zweiten Nocken zu den beiden ersten Nocken (6, 7) in Bezug auf eine Symmetrieachse, welche durch die zweite und die dritte Schwenkachse verläuft, symmetrisch angeordnet sind, wobei eine Rückstellfeder (38) zwischen der ersten Schwenkachse (11) und der vierten Schwenkachse angeordnet ist.

7. Blockiervorrichtung (5) zwischen einem ersten Rohr (2) und einem zweiten Rohr (3) nach Anspruch 5 oder 6, wobei die beiden ersten Nocken (6, 7) jeweils ein Langloch (13) umfassen, das dazu ausgelegt ist, die erste Schwenkachse (11) verschieblich aufzunehmen.

8. Blockiervorrichtung (5) zwischen einem ersten Rohr (2) und einem zweiten Rohr (3) nach Anspruch 6, wobei die beiden zweiten Nocken (8, 9) jeweils ein Langloch (15, 16) umfassen, das dazu ausgelegt ist, die vierte Schwenkachse (14) verschieblich aufzunehmen.

9. Blockiervorrichtung (5, 22) zwischen einem ersten Rohr (2) und einem zweiten Rohr (3) nach einem der Ansprüche 1 bis 8, die einen an der Stange (10, 30, 31) befestigten Bedienungsgriff (32) umfasst, wobei der Bedienungsgriff dazu ausgelegt ist, wenigstens die Stange in ihre Entriegelungsposition zu bewegen.

10. Blockiervorrichtung (5, 22) zwischen einem ersten Rohr (2) und einem zweiten Rohr (3) nach Anspruch 9, wobei eine Rückstellfeder zwischen dem ersten Rohr und dem Bedienungsgriff (32) angeordnet ist, wobei die Rückstellfeder dazu ausgelegt ist, einen Schub auf die Stange (10, 30, 31) auszuüben und die Nocken (6, 7, 8, 9, 23, 24, 25, 26) in ihre zweite Position zurückzubringen.

11. Blockiervorrichtung (5, 22) zwischen einem ersten Rohr (2) und einem zweiten Rohr (3) nach einem der Ansprüche 1 bis 10, wobei die wenigstens zwei Nocken (6, 7, 8, 9, 23, 24, 25, 26) innerhalb des ersten Rohrs angeordnet sind, wobei das erste Rohr wenigstens zwei Öffnungen (20, 21) umfasst, die dazu ausgelegt sind, den Durchgang der Nocken zu ermöglichen, um sie in ihrer zweiten Position, in Kontakt an der Innenseite des zweiten Rohrs anzuordnen.

12. Blockiervorrichtung (5, 22) zwischen einem ersten Rohr (2) und einem zweiten Rohr (3) nach einem der Ansprüche 1 bis 11, wobei die Nocken (6, 7, 8, 9, 23, 24, 25, 26) jeweils wenigstens eine Fläche zum Kontakt an der Innenseite des zweiten Rohrs umfassen, wobei die Kontaktfläche Rasten (50) umfasst, die dazu ausgelegt sind, an der Innenseite des zweiten Rohrs anzugreifen.

13. Fahrrad (1), umfassend insbesondere einen Rahmen, der ein Sattelrohr (3), einen Sattel (4) sowie eine Sattelstütze (2), welche den Sattel nach unten fortsetzt, umfasst, wobei die Sattelstütze in dem Sattelrohr verschieblich angebracht ist, wobei das Fahrrad ferner eine Blockiervorrichtung (5, 22), welche Gegenstand von einem der Ansprüche 1 bis 12 ist, umfasst, wobei die Sattelstütze das erste Rohr bildet und das Sattelrohr das zweite Rohr bildet.

14. Fahrrad (1) nach Anspruch 13, wobei ein Griff zur Bedienung (32) der Stange unter dem Sattel (4) angeordnet ist.

15. Fahrrad (1) nach Anspruch 14, wobei die Sattelstütze (2) und das Sattelrohr (3) jeweils einen Querschnitt mit zwei einander gegenüberliegenden Abflachungen (33, 34, 35, 36) aufweisen, wobei die Nocken (6, 7, 8, 9, 23, 24, 25, 26) sich an den Abflachungen (35, 36) des Sattelrohrs abstützen.

## Claims

1. A locking device (5, 22) for locking together a first tube (2) and a second tube (3) that are configured to enable said first tube (2) to slide in said second tube (3), the locking device comprising at least one rod (10, 30, 31) configured to move inside the first tube (2) and to be driven into two positions, from outside said first tube, the device (5, 22) further comprising a cam system made up of at least two cams (6, 7, 8, 9, 23, 24, 25, 26) that are mounted on the first tube to pivot about at least one pivot pin (17, 19, 20) perpendicular to a longitudinal axis (12, 37) of said first tube (2) and that are configured to pivot either into a first position in which the cams are not in contact with the second tube and allow the first tube to slide inside the second tube, or into a second position in which each of the cams exerts pressure on the inside face of the second tube and prevents the first tube from sliding inside the second tube, the rod being assembled with the cam system and configured so that it at least moves the cams into their first position when said rod is in an unlocking position, a repositioning system being configured to return said cams into their second position, said device(5, 22) being **characterized in that** said cam system is configured to accentuate the contact pressure of the cams (6, 7, 8, 9, 23, 24, 25, 26) on the inside face of the second tube when a force exerted on the first tube and urging said first tube to be moved both towards the inside of the second tube and also towards the outside thereof is increased.

2. A locking device (22) for locking together a first tube (2) and a second tube (3) according to claim 1, which device has at least one rod (30, 31) and four cams (23, 24, 25, 26) mounted in a cross configuration relative to one another, symmetrically and asymmetrically about the longitudinal axis (12) of the first tube, said cams also being mounted to pivot about the pivot pin (29) passing through the longitudinal axis of the first tube and fastened to said first tube.

3. A locking device (5, 22) for locking together a first tube (2) and a second tube (3) according to claim 1 or 2, the rod (10, 30, 31) moving longitudinally inside the first tube (2) and extending out through a distal end (2a) of said first tube, which distal end is disposed outside the second tube.

4. A locking device (22) for locking together a first tube (2) and a second tube (3) according to claim 2, a return spring being arranged between the cams (23, 24, 25, 26) and the pivot pin (29) that is secured to the first tube, said return spring being configured to exert a force against the cams so as to press said cams against the inside face of the second tube.

5. A locking device (5) for locking together a first tube (2) and a second tube (3) according to claim 1, the cam system including two first cams (6, 7) connected together and to pivot by a first pivot pin (11) that is perpendicular to the longitudinal axis (12) of the first tube and that is secured to the rod (10), said two first cams being respectively mounted to pivot about a second pivot pin (17) and about a third pivot pin (19), which second and third pins are perpendicular to the longitudinal axis of the first tube and are disposed symmetrically relative to each other about said longitudinal axis.

6. A locking device (5) for locking together a first tube (2) and a second tube (3) according to claim 5, the cam system including two second cams (8, 9) connected together and to pivot by a fourth pivot pin (14) that is perpendicular to the longitudinal axis (12) of the first tube, said two second cams being respectively mounted to pivot about the second pivot pin (17) and the third pivot pin (19), said two second cams being disposed symmetrically relative to the two first cams (6, 7) about an axis of symmetry passing through the second and third pivot pins, a return spring (38) being arranged between the first pivot pin (11) and the fourth pivot pin.

7. A locking device (5) for locking together a first tube (2) and a second tube (3) according to claim 5 or 6, each of the two first cams (6, 7) being provided with an oblong hole (13) configured for slidably receiving the first pivot pin (11).

8. A locking device (5) for locking together a first tube (2) and a second tube (3) according to claim 6, each of the second cams (8, 9) being provided with an oblong hole (15, 16) configured for slidably receiving the fourth pivot pin (14).

9. A locking device (5, 22) for locking together a first tube (2) and a second tube (3) according to any one of claims 1 to 8, which device further comprises a drive handle (32) secured to the rod (10, 30, 31), said drive handle being configured at least to move the rod into its unlocking position.

10. A locking device (5, 22) for locking together a first tube (2) and a second tube (3) according to claim 9, a return spring being arranged between the first tube and the drive handle (32), said return spring being configured to exert thrust on the rod (10, 30, 31) and to return the cams (6, 7, 8, 9, 23, 24, 25, 26) to their second position.

11. A locking device (5, 22) for locking together a first tube (2) and a second tube (3) according to any one of claims 1 to 10, the at least two cams (6, 7, 8, 9, 23, 24, 25, 26) being disposed inside the first tube, said first tube being provided with at least two slots (20, 21) configured to allow the cams to pass through so as to dispose them in their second position in contact against the inside face of the second tube.

12. A locking device (5, 22) for locking together a first tube (2) and a second tube (3) according to any one of claims 1 to 11, each of the cams (6, 7, 8, 9, 23, 24, 25, 26) having at least one contact surface for coming into contact against the inside face of the second tube, said contact surface being provided with teeth (50) configured to grip the inside face of the second tube.

13. A bicycle (1) including, in particular, a frame having a saddle tube (3), a saddle (4), and a saddle post (2) extending said saddle downwards, said saddle post being mounted to slide in the saddle tube, said bicycle further including a locking device (5, 22) according to any one of claims 1 to 12, said saddle post constituting the first tube and said saddle tube constituting the second tube.

14. A bicycle (1) according to claim 13, a drive handle (32) for driving the rod being disposed under the saddle (4).

15. A bicycle (1) according to claim 14, the saddle post (2) and the saddle tube (3) each having a cross section including two flats (33, 34, 35, 36) opposite each other, the cams (6, 7, 8, 9, 23, 24, 25, 26) bearing against the flats (35, 36) in the saddle tube.
